# EUROPÄISCHE PATENTANMELDUNG

(11) **EP 1 452 358 A1**
(43) Veröffentlichungstag der Anmeldung: **01.09.2004**
(21) Anmeldenummer: 03100486.4
(22) Anmeldetag: 27.02.2003
(51) Int. Cl.: B60H 1/34

(54) **Luftausströmer**

(71) Anmelder: Ford Global Technologies, Inc., A subsidiary of Ford Motor Company, Dearborn, Michigan 48126 (US)
(72) Erfinder: Karadia, Narendra, Knighton, Leicestershire LE2 3DF (GB)
(74) Vertreter: Drömer, Hans-Carsten, Dr.-Ing.

(57) **Zusammenfassung**

Luftausströmer, insbesondere für einen Fahrzeuginnenraum, mit einem Luftaustritt (3), in dem Lamellen (2) schwenkbar angeordnet sind, wobei die Lamellen (2) in eine den Luftaustritt (3) schließende Stellung schwenkbar sind. Sie ist dadurch gekennzeichnet, daß in geschlossener Stellung der Lamellen (2) zumindest eine Lüftungsöffnung (9) vorhanden ist, die nicht durch Lamellen (2) verschlossen ist. Bevorzugt ist dabei die Lüftungsöffnung (9) schlitzförmig zwischen den Lamellen (2) angeordnet.

Indem in geschlossener Stellung der Lamellen (2) zumindest eine Lüftungsöffnung (9) vorhanden ist, die nicht durch Lamellen (2) verschlossen wird, können die Lamellen (2) zumindest bei geringem Luftbedarf geschlossen bleiben. Die Luftzufuhr, z. B. in den Innenraum eines Kraftfahrzeuges, erfolgt dann ausschließlich über die zusätzlichen Lüftungsöffnungen (9). Dies kann vorteilhaft z. B. bei der Zwangsbelüftung eines Innenraumes angewendet werden.

## Beschreibung

Die Erfindung betrifft einen Luftausströmer, insbesondere für einen Fahrzeuginnenraum, gemäß dem Oberbegriff des Anspruches 1.

Aus der WO 01/08912 und aus der WO 02/100669 sind Luftausströmer mit einem Luftaustritt bekannt, in dem Lamellen schwenkbar angeordnet sind, wobei die Lamellen in eine den Luftaustritt schließende Stellung schwenkbar sind. Die Lamellen sind so bemessen, daß sie in geschlossener Stellung den Luftaustritt vollständig schließen. Dabei entsteht durch die geschlossenen Lamellen eine optisch ansprechende, überwiegend glatte Oberfläche, was bei der geschlossenen Stellung aus ästhetischen Gründen erwünscht ist. Soll jedoch Luft aus dem Luftausströmer austreten, müssen die Lamellen geschwenkt werden, damit die Luft zwischen den Lamellen durchtreten kann. Neben dem notwendigen Bedienaufwand für die Verschwenkung ist ein weiterer Nachteil, daß der ästhetische Eindruck der vormals glatten Oberfläche gestört ist.

Aufgabe der Erfindung ist es deshalb, einen Luftausströmer so weiterzubilden, daß zumindest bei kleinem Luftbedarf die Lamellen nicht verschwenkt werden müssen, und der optische Eindruck der geschlossenen Lamellen nicht gestört ist.

Gelöst wird dies Aufgabe mit den Merkmalen des Anspruches 1.

Indem in geschlossener Stellung der Lamellen zumindest eine Lüftungsöffnung vorhanden ist, die nicht durch Lamellen verschlossen wird, können die Lamellen zumindest bei geringem Luftbedarf geschlossen bleiben. Die Luftzufuhr, z. B. in den Innenraum eines Kraftfahrzeuges, erfolgt dann ausschließlich über die zusätzliche Lüftungsöffnung bzw. Lüftungsöffnungen. Dies kann vorteilhaft z. B. bei der Zwangsbelüftung eines Innenraumes angewendet werden. Ohne das die Lamellen geöffnet werden müssen, kann eine gewisse Luftmenge durch die Lüftungsöffnungen aus dem Luftaustritt strömen, wobei der Benutzer aufgrund der geringen Luftmenge nicht durch einen Luftzug gestört wird, weder akustisch noch physisch. Als Luftmenge ist hier die Menge an Luft zu verstehen, die innerhalb einer gewissen Zeiteinheit durch den Luftaustritt strömt.

Die Luftzufuhr kann automatisch geregelt sein, indem z. B. die automatische Klimaanlage eines Fahrzeuges selbsttätig dem Luftauströmer eine gewisse Luftmenge zuführt, intervallmäßig oder abhängig von der Zusammensetzung der Luftbestandteile im zu belüftenden Raum. Oder die Luftzufuhr kann ständig erfolgen, indem z. B. ständig eine Grund-Luftmenge dem Luftausströmer zugeführt wird. Oder die Luftzuführung wird vom Benutzer veranlaßt, z. B. als "leichte Belüftungsstufe". Neben der nicht notwendigen Verschwenkung der Lamellen ist der weitere erfindungsgemäße Vorteil, daß der optische Eindruck der geschlossenen Lamellen nicht gestört wird, da diese trotz der durch die Lüftungsöffnungen strömenden Luftmenge geschlossen bleiben können.

In einer bevorzugten Ausführung ist eine Lüftungsöffnung durch eine Ausnehmung an zumindest einer Lamelle gebildet. Eine Ausnehmung kann ein Loch oder ein beliebig geformter Ausschnitt, z. B. ein Längsschlitz, in der Lamelle sein. Natürlich ist die Anzahl der Ausnehmungen auf einer Lamelle beliebig. Ebenso kann nur eine Lamelle, oder ein Teil der Lamellen, oder alle Lamellen Ausnehmungen aufweisen. Ausnehmungen sind so gestaltet, daß die oben beschriebene Funktion der Lüftung bei geschlossener Stellung der Lamellen ausreichend erfüllt wird.

Bevorzugt wird eine Lüftungsöffnung gebildet, indem eine Lamelle einen Bereich aufweist mit einer Breite, die kleiner ist als der von ihr zu verschließende Bereich des Luftaustritts. Dadurch entstehen die Lüftungsöffnungen zwischen Lamellen oder zwischen Lamellen und Gehäuse des Luftausströmers, jeweils in Form eines Lüftungsschlitzes bzw. Lüftungsspaltes. Dabei kann die Breite der einzelnen Lamelle - über ihre Länge gesehen - abschnittsweise oder kontinuierlich variieren, d. h. die Lüftungsschlitze und -spalte können eine geringe Länge als die Länge der Lamellen aufweisen. Zudem können eine oder mehrere Lamellen eine geringere Breite aufweisen, gegebenenfalls auf unterschiedlicher Länge der Lamellen. Weiterhin müssen die Schlitze keine parallelen Ränder aufweisen, vielmehr können die Lamellen im Bereich der Lüftungsöffnungen jede beliebige Berandung aufweisen, z. B. sind die Schlitze wellenförmig, oder sie laufen konisch zu.

In einer weiteren Ausführung ist eine Lüftungsöffnung gebildet, indem eine Lamelle kürzer ist als die Breite des Luftaustritts im von der Lamelle zu verschließenden Bereich des Luftaustritts. Dann wird die Lüftungsöffnung als Spalt zwischen Gehäuse und Lamellenstirnseite gebildet.

Die Lamellen können sowohl horizontal als auch vertikal, oder unter einem beliebigen Winkel angeordnet sein, je nachdem welche Anforderungen bezüglich Funktionalität und Optik an den Luftauströmer gestellt werden.

Bevorzugt ist am Luftausströmer eine Verschlußklappe zur Regelung der Luftzufuhr zum Luftaustritt vorhanden. Mittels der Verschlußklappe können am Luftausströmer verschiedene Zustände der Belüftung eingestellt werden. Es können Verschlußklappe und Lamellen geschlossen sein. In diesem Fall tritt gar keine Luft aus dem Luftausströmer aus. Oder die Verschlußklappe ist geöffnet, und die Lamellen sind geschlossen. In einem solchen Fall liegt der oben beschriebene Zustand der Belüftung mit einer gewissen, geringen Luftmenge vor. Über die Stellung der Verschlußklappe kann auch diese geringe Luftmenge geregelt werden. Oder Verschlußklappe und Lamellen sind beide geöffnet. Dies entspricht der normalen Belüftungsstellung, wenn ein große Luftmenge austritt. Dabei wird die Luftmenge über die Stellung der Verschlußklappe gesteuert, und die Lamellen lenken den Luftstrom in die vom Benutzer gewünschte Richtung.

Weitere Ausgestaltungen der Erfindung und Vorteile sind der folgenden Beschreibung und den Zeichnungen zu entnehmen. Es zeigen:
- Fig. 1: eine perspektivische Ansicht eines Luftausströmers mit geschlossenen Lamellen;
- Fig. 2: eine perspektivische Ansicht des Luftausströmers aus Fig. 1 mit geöffneten Lamellen;
- Fig. 3: einen Querschnitt durch den Luftausströmer nach Fig. 1 mit geschlossenen Lamellen und geschlossener Verschlußklappe;
- Fig. 4: einen Querschnitt durch den Luftausströmer nach Fig. 1 mit geschlossenen Lamellen und geöffneter Verschlußklappe; und
- Fig. 5: einen Querschnitt durch den Luftausströmer nach Fig. 1 mit geöffneten Lamellen und geöffneter Verschlußklappe.

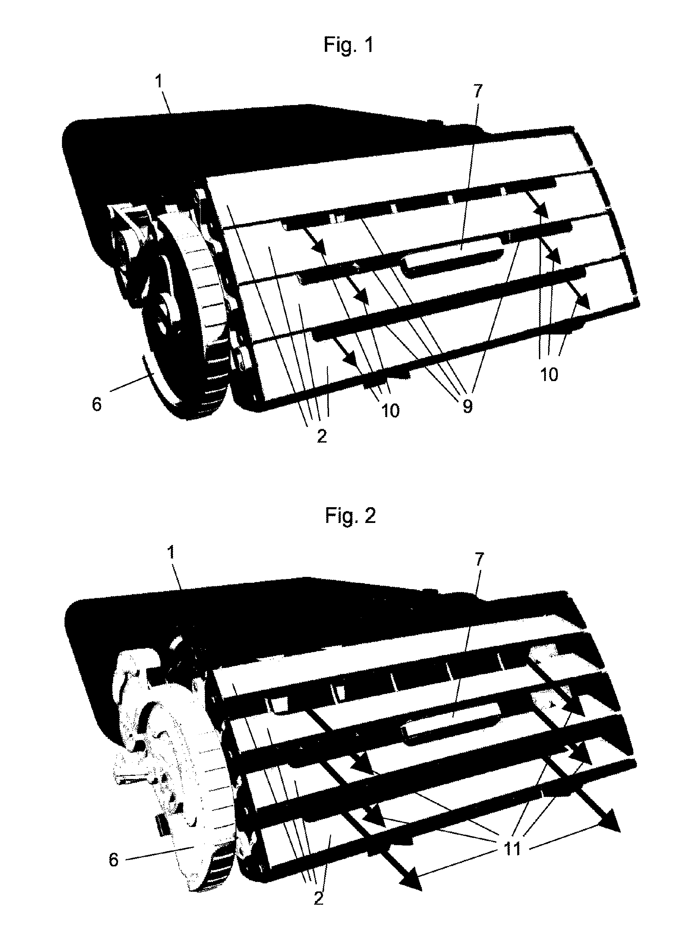

Der in den Fig. 1 bis Fig. 5 dargestellte Luftausströmer weist ein Gehäuse 1 und mehrere schwenkbar gelagerte Lamellen 2, die einen Luftaustritt 3 verschließen können, auf. Die Luftzufuhr in den Luftströmer erfolgt über eine Luftzuführung 4, die aus einer geeigneten, nicht dargestellten Luftzuführeinrichtung gespeist wird. Zwischen Luftzuführung 4 und Luftaustritt 3 ist drehbar im Gehäuse 1 die Verschlußklappe 5 angeordnet, mit der die Luftzufuhr geregelt werden kann, und die mittels eines Bedienrades 6 gesteuert wird. Weiterhin ist ein Schieberegler 7 vor den Lamellen im Luftaustritt 3 angeordnet, mit dem vertikale Luftleitelemente 8 ausgerichtet werden können, so daß ein aus dem Luftaustritt 3 austretender Luftstrom in eine vom Benutzer gewünschte Richtung abgelenkt wird. Die drei unteren Lamellen 2 weisen in ihrem Mittelabschnitt 2a eine geringere Breite auf, wodurch zwischen den Lamellen 2 die Lüftungsöffnungen 9 gebildet sind.

In Fig. 1 sind die Lamellen 2 geschlossen. Eine geringe Luftmenge 10, dargestellt durch kleine Pfeile, tritt aus den Luftöffnungen 9 aus. Wegen des geringen Querschnitts der Lüftungsöffnungen 9 relativ zum gesamten Querschnitt des Luftaustrittes 3 kann nur eine geringe Luftmenge 10 austreten. Dagegen sind in Fig. 2 die Lamellen 2 geöffnet, wodurch eine wesentlich größere Luftmenge 11, dargestellt durch große Pfeile, aus dem Luftaustritt 3 ausströmen kann.

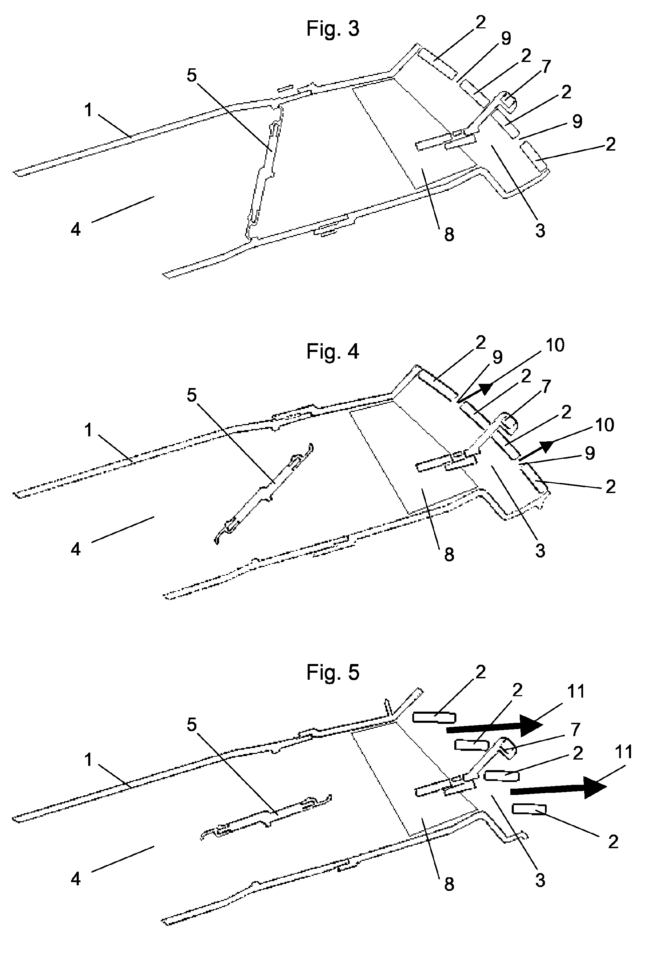

Fig. 3 zeigt den Querschnitt durch den Luftausströmer mit geschlossenen Lamellen 2 und geschlossener Verschlußklappe 5. In diesem Zustand kann überhaupt keine Luft aus dem Luftausströmer fließen. Eine solcher Zustand wird benötigt, wenn die Luftzufuhr über den Luftausströmer komplett unterbunden werden soll.

Fig. 4 zeigt den Querschnitt durch den Luftausströmer mit geschlossenen Lamellen 2 und geöffneter Verschlußklappe 5. Durch die zwischen den Lamellen 2 gebildeten Lüftungsöffnungen 9 kann eine bestimmte, geringe Luftmenge 10 austreten, die zusätzlich durch die Drehposition der Verschlußkappe 5 geregelt werden kann.

Fig. 5 schließlich zeigt den Querschnitt durch den Luftausströmer mit geöffneten Lamellen 2 und geöffneter Verschlußklappe 5. Dies entspricht der normalen Belüftungsstellung, wenn eine vom Benutzer gewünschte Luftmenge, u. a. geregelt durch die Verschlußklappe, durch den Luftaustritt strömt. Dabei kann die Richtung des Luftstromes in vertikaler Richtung durch die Stellung der Lamellen 2, und in horizontaler Richtung durch die Stellung der Luftleitelemente 8 vom Benutzer eingestellt werden.

Die Erfindung stellt somit einen Luftausströmer dar, der sowohl eine normale Belüftung bei geöffneten Lamellen 2 mit gerichtetem Luftstrom und großer Luftmenge, und eine Belüftung bei geschlossenen Lamellen 2 mit ungerichtetem Luftstrom und geringer Luftmenge ermöglicht.

## Patentansprüche

1. Luftausströmer, insbesondere für einen Fahrzeuginnenraum, mit einem Luftaustritt (3), in dem Lamellen (2) schwenkbar angeordnet sind, wobei die Lamellen (2) in eine den Luftaustritt (3) schließende Stellung schwenkbar sind,
**dadurch gekennzeichnet, daß**
in geschlossener Stellung der Lamellen (2) zumindest eine Lüftungsöffnung (9) vorhanden ist, die nicht durch Lamellen (2) verschlossen ist.

2. Luftausströmer nach Anspruch 1,
**dadurch gekennzeichnet, daß**
eine Lüftungsöffnung (9) durch eine Ausnehmung an einer Lamelle (2) gebildet ist.

3. Luftausströmer nach Anspruch 2,
**dadurch gekennzeichnet, daß**
eine Ausnehmung ein Loch in der Lamelle (2) mit beliebiger Berandung ist

4. Luftausströmer nach Anspruch 1, 2 oder 3,
**dadurch gekennzeichnet, daß**
eine Lüftungsöffnung (9) gebildet wird, indem eine Lamelle (2) einen Bereich (2a) aufweist mit einer Breite, die kleiner ist als der von ihr zu verschließende Bereich des Luftaustritts (3).

5. Luftausströmer nach einem der Ansprüche1 bis 4
**dadurch gekennzeichnet, daß**
eine Lüftungsöffnung (9) gebildet wird, indem eine Lamelle (2) kürzer ist als die Breite des Luftaustritts (3) im von der Lamelle (2) zu verschließenden Bereich des Luftaustritts (3).

6. Luftausströmer nach einem der Ansprüche1 bis 5
**dadurch gekennzeichnet, daß**
die Lamellen (2) überwiegend vertikal angeordnet sind.

7. Luftausströmer nach einem der Ansprüche1 bis 5
**dadurch gekennzeichnet, daß**
die Lamellen (2) überwiegend horizontal angeordnet sind.

8. Luftausströmer nach einem der Ansprüche1 bis 7
**dadurch gekennzeichnet, daß**
eine Verschlußklappe (5) zur Regelung der Luftzufuhr (10) zum Luftaustritt (3) vorhanden ist.

9. Luftausströmer nach Anspruch 8,
wobei der Luftausströmer einen der folgenden Zustände aufweisen kann:
- Verschlußklappe (5) und Lamellen (2) geschlossen;
- Verschlußklappe (5) geöffnet, Lamellen (2) geschlossen; und
- Verschlußklappe (5) und Lamellen (2) geöffnet.
